# EUROPEAN PATENT SPECIFICATION

(11) **EP 3 868 812 B1**
(45) Date of publication and mention of the grant of the patent: **15.10.2025**
(21) Application number: 19874046.6
(22) Date of filing: 09.05.2019
(51) Int. Cl.: C08J 5/18, C08L 67/02, C08G 63/42, B29C 55/02, C08G 63/199, C08G 63/672

(54) **POLYESTER FILM AND METHOD FOR PREPARING SAME**
POLYESTERFOLIE UND VERFAHREN ZU IHRER HERSTELLUNG
FILM DE POLYESTER ET SON PROCÉDÉ DE PREPARATION

(30) Priority: 19.10.2018 KR 20180125484
(43) Date of publication of application: 25.08.2021
(73) Proprietor: SK Chemicals Co., Ltd., Seongnam-si, Gyeonggi-do 13494 (KR)
(72) Inventor: HWANG, Da-Young, Seongnam-si Gyeonggi-do 13494 (KR); KIM, Sung-Gi, Gyeonggi-do 16823 (KR); LEE, Yoo Jin, Gyeonggi-do 13441 (KR)
(74) Representative: Berggren Oy
(86) International application number: PCT/KR2019/005999
(87) International publication number: WO 2020/080634

(56) References cited:
- EP-A1- 1 085 976
- EP-B1- 1 085 976
- WO-A1-2017/111370
- WO-A1-2018/101320
- JP-A- 2012 126 821
- JP-A- H11 286 539
- KR-A- 20140 092 113
- KR-A- 20180 058 526
- KR-B1- 100 535 850
- US-A- 5 958 581

## Description

The present invention relates to a polyester film and a method for preparing the same.

PET (polyethylene terephthalate) which is representative of a polyester copolymer is widely used as materials such as an optical film, an electric insulation film, a packaging film, a laminate film, and various protective films due to its low cost and excellent mechanical/chemical/electrical properties. However, PET does not have good heat resistance. Thus, the heat resistance of the PET film is increased through a heat setting step at a high temperature, but when the PET film is exposed to a high temperature for a long period of time, there is a problem that as oligomers are precipitated on the surface of the film and crystallized, the transparency is lowered. In order to prevent such a problem, a method of adding a separate process such as coating has been proposed, but there are problems that the manufacturing process is complicated, defects occur during post-processing, and contamination occurs.

In a process in which molding such as printing is applied to a film, the method applied at a high temperature of around 80°C tends to increase due to reasons such as improvement in productivity. However, the glass transition temperature of PET is 80°C or less, and when the molding process such as printing is performed at a high temperature, the probability of occurrence of defects remarkably increases. Further, when the chemical resistance is weakened due to the solvent used for printing, transparency and surface defects are likely to occur.

In addition, PET has a high degree of crystallinity, especially possesses high crystallinity when uniaxially or biaxially drawn, and this it is disadvantageous in terms of heat sealability. Accordingly, a film used for optical application has a low oligomer content even in a high-temperature process and thus is required to have a high transparency. In addition, in order to provide a film to be used for printing and the like, it is necessary to develop a material capable of having high heat resistance and chemical resistance and thus improving productivity. In particular, there is a further need for studies on a polyester film having properties capable of improving the heat sealability by controlling the crystallinity in industrial or packaging applications, etc.
US 5 958 581 A discloses a polyester film and methods for making same.
EP 1 085 976 A1 discloses sheets formed from polyesters including isosorbide. WO 2017/111370 A1 discloses a polyester resin, a method for producing same, and a resin molded product formed therefrom.

An object of the present invention is intended to provide a drawn polyester film having high transparency, high heat resistance, chemical resistance and improved heat sealability. Another object of the present invention is intended to provide a method for preparing the above-mentioned drawn polyester film.

In one aspect of the invention, there is provided a drawn polyester film including a polyester copolymer containing a first repeating unit represented by the following Chemical Formula 1; and a second repeating unit represented by the following Chemical Formula 2 and a third repeating unit represented by the following Chemical Formula 3, wherein the drawn polyester film has a transmittance of 88% or more at a thickness of 200 um and a wavelength of 400 to 700 nm; 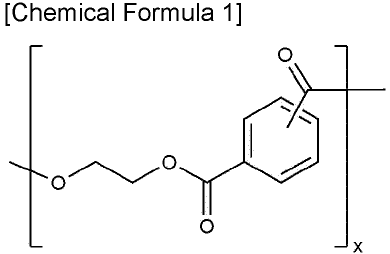 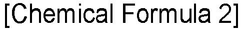 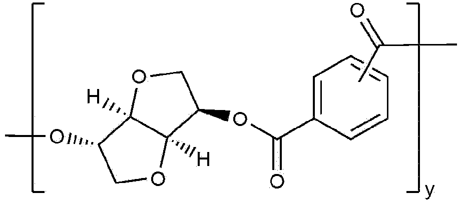 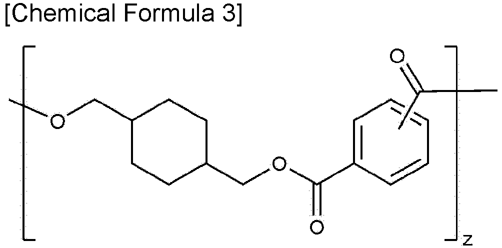 in Chemical Formulas 1 to 3,
x, y, and z are mole fractions in the copolymer, respectively, and the sum of y and z is 5 mol% or more and less than 20 mol%,
y is 1 mol% or more and 5 mol% or less, and
z is 5 mol% or more and 15 mol% or less.

Hereinafter, the present invention will be described in detail.

The first repeating unit according to the present invention is prepared by reacting terephthalic acid with ethylene glycol, and is a main repeating unit of the polyester copolymer according to the present invention. In Chemical Formula 1, x is a mole fraction of the first repeating unit in the polyester copolymer, preferably 80 mol% or more and 95 mol% or less.

The second repeating unit according to the present invention is prepared by reacting terephthalic acid with isosorbide, and the third repeating unit according to the present invention is prepared by reacting terephthalic acid with cyclohexane dimethanol. The second repeating unit and the third repeating unit are contained in the polyester copolymer according to the present invention, which includes both the second repeating unit and the third repeating unit. In Chemical Formula 2, y is a mole fraction of the second repeating unit in the polyester copolymer, and in Chemical Formula 3, z is a mole fraction of the third repeating unit in the polyester copolymer.

The sum of y and z is 5 mol% or more and less than 20 mol%. In general, when only the second repeating unit is contained in the polyester copolymer, z is 0, and when only the third repeating unit is contained in the polyester copolymer, y is 0.

In particular, the polyester copolymer according to the present invention is excellent in chemical resistance and transparency, and in particular, the mole fraction of the second repeating unit and the third repeating unit has a significant influence on the chemical resistance and transparency.

The above-mentioned repeating units may be prepared via (a) an esterification reaction or transesterification reaction of terephthalic acid, ethylene glycol, isosorbide and cyclohexane dimethanol, and (b) a polycondensation reaction.

Specifically, the polyester copolymer can be prepared via the steps of (a) carrying out an esterification reaction or a transesterification reaction of terephthalic acid, ethylene glycol, and isosorbide and cyclohexanedimethanol; and (b) subjecting the esterification or transesterification reaction product to a polycondensation reaction.

Here, the preparation method may be performed in batch, semi-continuous or continuous mode, and the esterification reaction or transesterification reaction and the polycondensation reaction are preferably carried out under an inert gas atmosphere, the mixing of the polyester copolymer and other additives may be simple mixing or mixing via extrusion.

In addition, a solid-phase reaction may be subsequently performed as needed, Specifically, a method for preparing a polyester copolymer according to one embodiment of the invention may further include, after step (b), (c) crystallizing the polymer prepared by the polycondensation reaction (melt polymerization); and (d) subjecting the crystallized polymer to a solid-phase reaction.

In the (a) esterification reaction or transesterification reaction, a catalyst may be used. As such a catalyst, there may be mentioned sodium methylate, magnesium methylate; acetates, borates, fatty acid salts, carbonates and alkoxy salts of Zn, Cd, Mn, Co, Ca, Ba and Ti, etc.; oxides of metal Mg; Pb, Zn, Sb, Ge, etc.

The (a) esterification reaction or transesterification reaction may be carried out in batch, semi-continuous or continuous mode. Respective raw materials may be added separately, but are preferably added in a slurry form in which the dicarboxylic acid or the derivative thereof is mixed in the diol.

A polycondensation catalyst, a stabilizer, a coloring agent, a crystallizing agent, an antioxidant, a branching agent, or the like, may be added to the slurry before the start of the (a) esterification reaction or transesterification reaction or to the product after the completion of the (a) esterification reaction or transesterification reaction.

However, the timing of adding the additives is not limited thereto, and they may be applied at any time during the preparation of the polyester copolymer. As the polycondensation catalyst, one or more of conventional titanium-based, germanium-based, antimony-based, aluminum-based, tin-based compounds, etc., may be suitably selected and used. As useful titanium-based catalyst, there may be mentioned tetraethyl titanate, acetyltripropyl titanate, tetrapropyl titanate, tetrabutyl titanate, polybutyl titanate, 2-ethylhexyl titanate, octylene glycol titanate, lactate titanate, triethanolamine titanate, acetylacetonate titanate, ethylacetoacetic ester titanate, isostearyl titanate, titanium dioxide, titanium dioxide/silicon dioxide copolymer, and titanium dioxide/zirconium dioxide copolymer, etc. In addition, examples of useful germanium-based catalyst may include germanium dioxide and a copolymer thereof, etc. As the stabilizer, a phosphorus-based compound such as phosphoric acid, trimethylphosphate, triethylphosphate, etc., may be generally used. An added content thereof is 10 to 200 ppm based on a phosphorus element amount relative to the weight of the final polymer (polyester copolymer). When the added content of the stabilizer is less than 10 ppm, a stabilizing effect is not sufficient, and a color of the polymer may turn yellow. When the added content thereof is more than 200 ppm, a polymer having a desired high degree of polymerization may not be obtained. Further, as the coloring agent to be added for improving a color of the polymer, there may be mentioned general coloring agents such as cobalt acetate and cobalt propionate, etc. An added content of the coloring agent is 10 to 200 ppm based on a cobalt element amount relative to the weight of the final polymer (polyester copolymer). If necessary, an anthraquionone-based compound, a perinone-based compound, an azo-based compound, a methine-based compound, etc., may be used as a coloring agent for an organic compound. Examples of commercially available products may include a toner such as Polysynthren Blue RLS from Clarient Corp., Solvaperm Red BB from Clarient Corp., etc. The added content of the coloring agent for the organic compound may be adjusted to 0 to 50 ppm relative to the weight of the final polymer. When the coloring agent is used at a content beyond the above-described range, a yellow color of the polyester copolymer may not be sufficiently blocked or physical properties may be deteriorated.

Examples of the crystallizing agent may include a crystal nucleating agent, an ultraviolet absorber, a polyolefin-based resin, a polyamide resin, etc. Examples of the antioxidant may include a hindered phenol-based antioxidant, a phosphate-based antioxidant, a thioether-based antioxidant, or a mixture thereof, etc. The branching agent is a general branching agent having three or more functional groups, and for example, may include trimellitic anhydride, trimethylol propane, trimellitic acid, or a mixture thereof, etc.

The (a) esterification reaction or transesterification reaction may be carried out at a temperature of 200 to 270°C and a pressure of 0 to 9.81·10⁶ Pa (0 to 10.0 kgf/cm²; 0 to 7355.6 mmHg), 0 to 4.90·10⁶ Pa (0 to 5.0 kgf/cm²; 0 to 3677.8 mmHg) or 9.8·10³ to 2.9·10⁵ Pa (0.1 to 3.0 kgf/cm²; 73.6 to 2206.7 mmHg). Here, the pressures expressed in kgf/cm² mean a gauge pressure, and the pressures expressed in mmHg mean an absolute pressure.

When the reaction temperature and the pressure are out of the above-described range, physical properties of the polyester copolymer may be deteriorated. The reaction time (average residence time) is usually 1 to 24 hours or 2 to 8 hours, and may be varied depending on the reaction temperature, the pressure, and the molar ratio of the diol to the dicarboxylic acid or the derivative thereof to be used.

The product obtained through the esterification reaction or the transesterification reaction may be prepared into a polyester copolymer having a higher degree of polymerization through the polycondensation reaction. Generally, the polycondensation reaction is carried out at a temperature of 150 to 300°C, 200 to 290°C, or 250 to 290°C under a reduced pressure of 1.33 to 5.33·10⁴ Pa (0.01 to 400 mmHg), 6.67 to 1.33·10⁴ Pa (0.05 to 100 mmHg) or 13 to 1.3·10³ Pa (0.1 to 10 mmHg). Here, the pressure means a range of an absolute pressure. The reduced pressure condition of 1.33 to 5.33·10⁴ Pa (0.01 to 400 mmHg) is for removing glycol, etc., that are by-products of the polycondensation reaction and the isosorbide, etc., that are unreacted materials. Accordingly, when the reduced pressure condition is out of the above-described range, by-products and unreacted materials may not be sufficiently removed. Moreover, when the reaction temperature for the polycondensation reaction is out of the above-described range, physical properties of the polyester copolymer may be deteriorated. The polycondensation reaction is performed for a necessary time until the desired intrinsic viscosity is reached, for example for an average residence time of 1 to 24 hours.

In order to reduce the content of the unreacted materials such as isosorbide, etc., remaining in the polyester copolymer, the unreacted raw materials may be discharged out of the system by intentionally maintaining the vacuum reaction long at the end of the esterification reaction or the transesterification reaction or at the beginning of the polycondensation reaction, that is, in a state in which the viscosity of the resin is not sufficiently high. When the viscosity of the resin is increased, the raw materials remaining in a reactor are difficult to escape out of the system. For example, the reaction product obtained through the esterification reaction or the transesterification reaction before the polycondensation reaction may be allowed to stand at a reduced pressure of about 5.33·10⁴ to 1·10² Pa (400 to 1 mmHg) or about 2.67·10⁴ to 4·10² Pa (200 to 3 mmHg) for 0.2 to 3 hours, thereby effectively removing unreacted materials such as isosorbide, etc., remaining in the polyester copolymer. At this time, the temperature of the product may be controlled to be equal to that of the esterification reaction or the transesterification reaction or that of the polycondensation reaction or a temperature therebetween.

As a step of flowing unreacted raw materials out of the system through the control of the vacuum reaction is further added, it is possible to reduce the content of unreacted materials such as isosorbide remaining in the polyester copolymer. As a result, a polyester copolymer satisfying the physical properties of one embodiment can be obtained more effectively.

Meanwhile, the polymer after the polycondensation reaction preferably may have an intrinsic viscosity of 0.45 to 0.75 dl/g.

In particular, if the crystallization step (c) and the solid phase polymerization step (d) described above are employed, the intrinsic viscosity of the polymer after the polycondensation reaction can be adjusted to 0.45 to 0.75 dl/g, 0.45 to 0.70 dl/g or 0.50 to 0.65 dl/g. If the intrinsic viscosity of the polymer after the polycondensation reaction is less than 0.45 dl/g, a reaction rate in the solid-phase reaction is significantly lowered, and a polyester copolymer having a very wide molecular weight distribution is obtained. When the intrinsic viscosity is greater than 0.75 dl/g, a possibility of discoloration of the polymer is increased due to shear stress between a stirrer and a reactor as a viscosity of a molten material during melt polymerization is increased, and side reaction materials such as acetaldehyde are increased. In addition, the crystallization rate becomes significantly slow, fusion occurs in the process of crystallization, and the pellet shape may also be easily deformed.

Meanwhile, if the crystallization step (c) and the solid phase polymerization step (d) described above are not employed, the intrinsic viscosity of the polymer after the polycondensation reaction can be adjusted to 0.65 to 0.75 dl/g. If the intrinsic viscosity is less than 0.65 dl/g, the crystallization rate is increased due to a low molecular weight polymer, making it difficult to provide a polyester copolymer with excellent heat resistance and transparency. When the intrinsic viscosity is greater than 0.75 dl/g, a possibility of discoloration of the polymer is increased due to shear stress between a stirrer and a reactor as a viscosity of a molten material during melt polymerization is increased, and side reaction materials such as acetaldehyde are increased.

The polyester copolymer according to one embodiment may be prepared through steps (a) and (b). If necessary, after the polycondensation reaction step (b), the crystallization step (c) and the solid phase polymerization step (d) may be further performed to provide a polyester copolymer having a higher degree of polymerization.

Specifically, in the crystallization step (c), the polymer obtained through the polycondensation reaction step (b) is discharged out of the reactor to perform granulation. A method of performing the granulation may be a strand cutting method in which the polymer is extruded into a strand shape, solidified in a cooling liquid, and then cut with a cutter, or an underwater cutting method in which a die hole is immersed in a cooling liquid, the polymer is directly extruded into the cooling liquid and cut with a cutter. Generally, in the strand cutting method, it is required that the strand is well solidified by maintaining a temperature of the cooling liquid to be low so as not to cause a problem in cutting. In the underwater cutting method, it is preferred to maintain the temperature of the cooling liquid to meet the polymer so that the shape of the polymer is uniform. However, in the case of a crystalline polymer, the temperature of the cooling liquid may be intentionally maintained to be high, thereby inducing crystallization during the discharge.

Meanwhile, it is also possible to additionally water-wash the granulated polymer. A temperature of water during the washing is preferably equal to the glass transition temperature of the polymer or lower than that by about 5 to 20°C, and when the temperature of water is higher than the above-described range, it is not preferred since fusion may occur. In the case of the particles of the polymer in which the crystallization is induced during the discharge, the fusion may not occur even at a temperature higher than the glass transition temperature, and thus, the temperature of water may be determined according to a degree of crystallization. By water-washing the granulated polymer, it is possible to remove the raw materials that are dissolved in water among the unreacted raw materials. It is advantageous that a particle size is small since as the smaller the particle size, the wider the surface area relative to a weight of particles. In order to achieve the purpose, the particles may be made to have an average weight of about 14 mg or less.

The granulated polymer is subjected to the crystallization step to prevent fusion during the solid-phase reaction. The crystallization step may proceed in an atmosphere, inert gas, water vapor, water vapor-containing inert gas atmosphere or in solution, and may be performed at 110°C to 180°C or 120°C to 180°C. When the temperature is low, a rate at which crystals of the particles are formed is excessively slow. When the temperature is high, a rate at which a surface of the particles is melted faster than a rate at which the crystals are formed, and the particles adhere to each other to cause fusion. Since the heat resistance of the particles is increased as the particles are crystallized, it is also possible to crystallize the particles by dividing the crystallization into several steps and raising the temperature stepwise.

The solid-phase reaction may be carried out under an inert gas atmosphere such as nitrogen, carbon dioxide, argon, etc., or at a reduced pressure of 5.33·10⁴ to 1 Pa (400 to 0.01 mmHg) and at a temperature of 180 to 220° C for an average residence time of 1 hour or more, preferably 10 hours or more. By performing the solid-phase reaction, the molecular weight may be additionally increased, and the raw materials remaining without being reacted in the melting reaction, and a cyclic oligomer, acetaldehyde, etc., that are generated during the reaction, may be removed.

In order to provide the polyester copolymer according to one embodiment, the solid phase polymerization can be carried out until the intrinsic viscosity reaches a value of 0.10 to 0.40 dl/g higher than the intrinsic viscosity of the resin obtained in the polycondensation reaction step (b). If the difference between the intrinsic viscosity of the resin after the solid phase polymerization and the intrinsic viscosity of the resin before the solid phase polymerization is less than 0.10 dl/g, an effect of sufficiently improving the degree of polymerization cannot be obtained. If the difference between the intrinsic viscosity of the resin after the solid phase polymerization and the intrinsic viscosity of the resin before the solid phase polymerization is greater than 0.40 dl/g, the molecular weight distribution becomes wide and thus sufficient heat resistance can not be exhibited. In addition, as the content of low molecular weight polymer is relatively increased and the crystallization rate is increased, the possibility of the occurrence of haze increases.

The solid phase polymerization can be carried out until the intrinsic viscosity of the resin is 0.10 to 0.40 dl/g higher than the intrinsic viscosity of the resin before the solid phase polymerization and reaches a value of 0.70 dl/g or more, 0.70 to 1.0 dl/g, or 0.70 to 0.95 dl/g. When the solid phase polymerization is carried out until the intrinsic viscosity of such a range is reached, the molecular weight distribution of the polymer becomes narrow and the crystallization rate during molding can be lowered. Thereby, the heat resistance and the crystallization degree can be improved without reducing the transparency. If the intrinsic viscosity of the resin after the solid phase polymerization reaction is less than the above range, the crystallization rate increases due to a low molecular weight polymer and thus it may be difficult to provide a polyester copolymer having excellent heat resistance and transparency.

Meanwhile, the polyester copolymer according to the present invention has a number average molecular weight (Mn) of 10,000 to 40,000, more preferably 15,000 to 35,000.

The drawn polyester film according to the present invention can be prepared by uniaxially or biaxially drawing the above-mentioned polyester copolymer.

Specifically, the drawn polyester film can be prepared by the method including the steps of: (a) melt-extruding a polyester copolymer to prepare an undrawn polyester film including a resin layer formed from the polyester copolymer; and (b) drawing the undrawn polyester film at a temperature not lower than the glass transition temperature of the polyester copolymer.

In the step (a), the polyester copolymer can be melt-extruded at a relatively low temperature to minimize thermal decomposition of the polymer and maintain the long-chain structure of the polymer. Specifically, the step (a) may be performed at a temperature of 240°C to 310°C or 250°C to 300°C. If the melt extrusion temperature is less than 240°C, there is a problem that the polymer is not melted, and if the melt extrusion temperature is higher than 310°C, the thermal decomposition of the polymer is increased, and the film is damaged or broken during drawing and forming the film, making it difficult to realize the desired physical properties.

The undrawn polyester film obtained in the step (a) may be cooled to an appropriate temperature. Subsequently, the undrawn polyester film can be drawn at a temperature not lower than the glass transition temperature of the polyester copolymer. Specifically, the drawing step of the undrawn polyester film may be performed at a temperature of 80°C to 180°C, 90°C to 170°C, or 90°C to 150°C. In the step (b), the undrawn polyester film can be drawn at a high magnification.

Specifically, when the undrawn polyester film is uniaxially drawn, the uniaxial draw ratio is preferably 1 to 5. More preferably, a longitudinal draw ratio of 1 to 3.5, or a transverse draw ratio of 1 to 5 is preferred. Moreover, when the undrawn polyester film is biaxially drawn, a longitudinal draw ratio of 3 to 3.5 and a transverse draw ratio of 4 to 5 is preferred. More preferably, a product of the longitudinal draw ratio and the transverse draw ratio is 12 to 18.

The method for preparing a polyester film may further include, after the step (b), (c) thermally fixing the polyester film obtained in step (b). The step (c) may be performed at a temperature of 100°C to 220°C.

Preferably, the thickness of the undrawn film which is the film before drawing is 0.1 to 10 mm, and the thickness of the film after drawing is 5 um to 500 um.

The drawn polyester film according to the present invention has a feature that it has a transmittance of 88% or more at a thickness of 200 um and a wavelength of 400 to 700 nm.

According to other embodiment of the invention, there is provided an article including the drawn polyester film described above. Examples of the article include an industrial film, a film for food container, a packaging film, an optical film, an insulation film, or a printing film. The drawn polyester film according to one embodiment of the invention exhibits excellent heat resistance, chemical resistance and good heat sealability, and has improved mechanical strength and transparency, and thus, can be utilized in various fields. In particular, it is expected to be useful for optical films requiring high transparency, films for food containers and printing films requiring high heat resistance and chemical resistance. In addition, the polyester film is expected to be useful for industrial and packaging film applications due to the above-mentioned good heat sealability. Furthermore, the drawn polyester film according to the present invention can be used together with other polymers or other films as needed, and can be used in multiple layers with, for example, PET blend or PET.

The drawn polyester film according to the present invention is formed of a polyester resin containing a low content of oligomers, and thus can prevent the precipitation of oligomer in a high temperature post-process, can maintain a low haze value even after heat treatment, is excellent in heat resistance and chemical resistance and can exhibit good heat sealability. Therefore, the polyester film can be used for various applications such as an industrial film, a film for food container, a packaging film, an optical film, an insulation film, or a printing film.

Hereinafter, preferred examples will be presented to facilitate understanding of the present invention. However, these examples are provided for a better understanding of the present invention only, and are not intended to limit the scope of the present invention. Examples 1 to 3 and 8 to 10 represent Reference Examples.

The following physical properties were evaluated or the following analyzes were performed according to the following methods.
(1) Intrinsic viscosity (IV): 0.36±0.0002 g of a sample was dissolved in 30 mL of ortho-chlorophenol at 150°C for 15 minutes, and the intrinsic viscosity of the sample was measured using a Ubbelodhe viscometer in a thermostatic chamber at 35°C.
(2) Compositions of residues derived from an acid and a diol in the polyester copolymer were confirmed by 1H-NMR spectrum obtained at 25°C using a nuclear magnetic resonance apparatus (JEOL, 600 MHz FT-NMR) after the sample was dissolved in a CDCl₃ solvent at a concentration of 3 mg/m L.

### Example 1: Preparation of Polyester Copolymer

Terephthalic acid (3257.4 g), ethylene glycol (1423.4 g), and isosorbide (229.2 g) were put into a 10 L volumetric reactor to which a column, and a condenser capable of being cooled by water were connected. GeO₂ (1.0 g) as a catalyst, phosphoric acid (1.46 g) as a stabilizer, and cobalt acetate (0.7 g) as a coloring agent were used.

Then, nitrogen was injected into the reactor to form a pressurized state in which a pressure of the reactor was higher than normal pressure by 1.0 kgf/cm² (absolute pressure: 1495.6 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 280°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.55 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.75 dl/g.

A residue derived from terephthalic acid was 100 mol% with respect to a residue derived from a total acid included in the thus-prepared polyester copolymer, and a residue derived from isosorbide was 5 mol%, with respect to a residue derived from a total diol.

### Example 2: Preparation of Polyester Copolymer

Terephthalic acid (3189.1 g), ethylene glycol (1334.1 g), and isosorbide (504.9 g) were put into a 10 L volumetric reactor to which a column, and a condenser capable of being cooled by water were connected. GeO₂ (1.0 g) as a catalyst, phosphoric acid (1.46 g) as a stabilizer, and cobalt acetate (0.7 g) as a coloring agent were used.

Then, nitrogen was injected into the reactor to form a pressurized state in which a pressure of the reactor was higher than normal pressure by 5 2.0·10⁵ Pa (1.0 kgf/cm²; absolute pressure: 1495.6 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 280°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.50 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg. The particles were then kept in water at 70°C for 5 hours, then taken out and dried.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.95 dl/g.

A residue derived from terephthalic acid was 100 mol% with respect to a residue derived from a total acid included in the thus-prepared polyester copolymer, and a residue derived from isosorbide was 10 mol% with respect to a residue derived from a total diol.

### Example 3: Preparation of Polyester Copolymer

Terephthalic acid (3356.5 g), ethylene glycol (1341.4 g), and isosorbide (826.6) were put into a 10 L volumetric reactor to which a column, and a condenser capable of being cooled by water were connected. GeO₂ (1.0 g) as a catalyst, phosphoric acid (1.46 g) as a stabilizer, Polysynthrene Blue RLS (Clarient Corp., 0.016 g) as a blue toner, Solvaperm Red BB (Clarient Corp., 0.004 g) as a red toner, and polyethylene (LUTENE-H ME1000, LG Chem Ltd., 0.004 g) as a crystallizing agent, and Iganox 1076 (4 g) as an oxidation stabilizer were used.

Then, nitrogen was injected into the reactor to form a pressurized state in which a pressure of the reactor was higher than normal pressure by 1.5·10⁵ Pa (0.5 kgf/cm²; absolute pressure: 1127.8 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 275°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.60 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from the terephthalic acid was 100 mol% with respect to a residue derived from a total acid included in the thus-prepared polyester copolymer, and a residue derived from the isosorbide was 5 mol% with respect to a residue derived from a total diol.

### Example 4: Preparation of Polyester Copolymer

Terephthalic acid (4297.3 g), ethylene glycol (1845.8 g), cyclohexane-1,4-diyldimethanol (186.4 g), and isosorbide (189.0 g) were put into a 10 L volumetric reactor to which a column, and a condenser capable of being cooled by water were connected. GeO₂ (1.0 g) as a catalyst, phosphoric acid (1.46 g) as a stabilizer, cobalt acetate (1.1 g) as a coloring agent and TMA (trimellitic anhydrate, 22 g) as a branching agent were used.

Then, nitrogen was injected into the reactor to form a pressurized state in which a pressure of the reactor was higher than normal pressure by 2·10⁵ Pa (1 kgf/cm²; absolute pressure: 1495.6 mmHg). Then, a temperature of the reactor was raised up to 220°C over 90 minutes, maintained at 220°C for 2 hours, and then raised up to 250°C over 2 hours. Next, a temperature of the reactor was maintained at 250°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 265°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.60 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, a residue derived from isosorbide was 2 mol%, and a residue derived from cyclohexanedimethanol was 5 mol%, with respect to a residue derived from a total diol.

### Example 5: Preparation of Polyester Copolymer

Terephthalic acid (3316.0 g), ethylene glycol (1164.2 g), cyclohexane-1,4-diyldimethanol (230.1 g), and isosorbide (87.5 g) were put into a 10 L volumetric reactor to which a column, and a condenser capable of being cooled by water were connected. GeO₂ (1.0 g) as a catalyst, phosphoric acid (1.46 g) as a stabilizer, and cobalt acetate (0.8 g) as a coloring agent were used.

Then, nitrogen was injected into the reactor to form a pressurized state in which a pressure of the reactor was higher than normal pressure by 3·10⁵ Pa (2 kgf/cm²; absolute pressure: 2231.1 mmHg). Then, a temperature of the reactor was raised up to 220°C over 90 minutes, maintained at 220°C for 2 hours, and then raised up to 255°C over 2 hours. Next, a temperature of the reactor was maintained at 255°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 285°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.55 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, a residue derived from isosorbide was 2 mol%, and a residue derived from cyclohexanedimethanol was 8 mol%, with respect to a residue derived from a total diol.

### Example 6: Preparation of Polyester Copolymer

Terephthalic acid (3124.0 g), ethylene glycol (1330.2 g), cyclohexane-1,4-diyldimethanol (216.8 g), and isosorbide (219.8 g) were put into a 10 L volumetric reactor to which a column, and a condenser capable of being cooled by water were connected. GeO₂ (1.0 g) as a catalyst, phosphoric acid (1.46 g) as a stabilizer, cobalt acetate (1.0 g) as a coloring agent, and Iganox 1076 (15.4 g) as an oxidation stabilizer were used.

Then, nitrogen was injected into the reactor to form a pressurized state in which a pressure of the reactor was higher than normal pressure by 2.3·10⁵ Pa (1.5 kgf/cm²; absolute pressure: 1715.5 mmHg). Then, a temperature of the reactor was raised up to 220°C over 90 minutes, maintained at 220°C for 2 hours, and then raised up to 250°C over 2 hours. Next, a temperature of the reactor was maintained at 250°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 270°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.60 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.75 dl/g.

A residue derived from terephthalic acid was 100 mol% with respect to a residue derived from a total acid included in the thus-prepared polyester copolymer, a residue derived from isosorbide was 4 mol%, and a residue derived from cyclohexanedimethanol was 8 mol%, with respect to a residue derived from a total diol.

### Example 7: Preparation of Polyester Copolymer

Terephthalic acid (3371.0 g), ethylene glycol (1435.3 g), cyclohexane-1,4-diyldimethanol (438.6 g), and isosorbide (177.9 g) were put into a 10 L volumetric reactor to which a column, and a condenser capable of being cooled by water were connected. GeO₂ (1.0 g) as a catalyst, phosphoric acid (1.46 g) as a stabilizer, Polysynthrene Blue RLS (Clarient Corp., 0.013 g) as a blue toner, and Solvaperm Red BB (Clarient Corp., 0.004 g) as a red toner were used.

Then, nitrogen was injected into the reactor to form a pressurized state in which a pressure of the reactor was higher than normal pressure by 2·10⁵ Pa (1 kgf/cm²; absolute pressure: 1495.6 mmHg). Then, a temperature of the reactor was raised up to 220°C over 90 minutes, maintained at 220°C for 2 hours, and then raised up to 265°C over 2 hours. Next, a temperature of the reactor was maintained at 265°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 275°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.70 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, a residue derived from isosorbide was 3 mol% and a residue derived from cyclohexanedimethanol was 15 mol%, with respect to a residue derived from a total diol.

### Example 8: Preparation of Polyester Copolymer

Terephthalic acid (3158.8 g), ethylene glycol (1427.5 g), and cyclohexane-1,4-diyldimethanol (520.6 g) were put into a 10 L volumetric reactor to which a column, and a condenser capable of being cooled by water were connected. GeO₂ (1.0 g) as a catalyst, phosphoric acid (1.46 g) as a stabilizer, Polysynthrene Blue RLS (Clarient Corp., 0.020 g) as a blue toner, and Solvaperm Red BB (Clarient Corp., 0.008 g) as a red toner were used.

Then, nitrogen was injected into the reactor to form a pressurized state in which a pressure of the reactor was higher than normal pressure by 1.5·10⁵ Pa (0.5 kgf/cm²; absolute pressure: 1127.8 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 275°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.80 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, and a residue derived from cyclohexanedimethanol was 18 mol%, with respect to a residue derived from a total diol.

### Example 9: Preparation of Polyester Copolymer

Dimethyl phthalate (3727.0 g), ethylene glycol (2620.5 g), and isosorbide (841.5 g) were put into a 10 L volumetric reactor to which a column, and a condenser capable of being cooled by water were connected. Mn(II) acetate tetrahydrate(1.5 g) and Sb₂O₃(1.8 g) as a catalyst, phosphoric acid (1.46 g) as a stabilizer, and cobalt acetate (0.7 g) as a coloring agent were used.

Then, nitrogen was injected into the reactor to set a pressure of the reactor to normal pressure. Then, a temperature of the reactor was raised up to 220°C over 90 minutes, maintained at 220°C for 2 hours, and then raised up to 240°C over 2 hours. Next, a temperature of the reactor was maintained at 240°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 265°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.50 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.95 dl/g.

A residue derived from dimethyl phthalate was 100 mol% with respect to a residue derived from a total acid included in the thus-prepared polyester copolymer, and a residue derived from isosorbide was 10 mol% with respect to a residue derived from a total diol.

### Example 10: Preparation of Polyester Copolymer

Terephthalic acid (3029.7 g), isophthalic acid (159.5 g), ethylene glycol (1334.1 g), and isosorbide (504.9 g) were put into a 10 L volumetric reactor to which a column, and a condenser capable of being cooled by water were connected. GeO₂ (1.0 g) as a catalyst, phosphoric acid (1.46 g) as a stabilizer, and cobalt acetate (0.7 g) as a coloring agent were used.

Then, nitrogen was injected into the reactor to form a pressurized state in which a pressure of the reactor was higher than normal pressure by 2.0·10⁵ Pa (1.0 kgf/cm²; absolute pressure: 1495.6 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 280°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.50 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.95 dl/g.

A residue derived from terephthalic acid and isophthalic acid was 100 mol% with respect to a residue derived from a total acid included in the thus-prepared polyester copolymer, and a residue derived from isosorbide was 10 mol% with respect to a residue derived from a total diol.

### Comparative Example 1: Preparation of Polyester Copolymer

Terephthalic acid (3000.5 g), ethylene glycol (1064.6 g), and isosorbide (1187.5 g) were put into a 10 L volumetric reactor to which a column, and a condenser capable of being cooled by water were connected. GeO₂ (1.0 g) as a catalyst, phosphoric acid (1.46 g) as a stabilizer, Polysynthrene Blue RLS (Clarient Corp., 0.017 g) as a blue toner, and Solvaperm Red BB (Clarient Corp., 0.006 g) as a red toner were used.

Then, nitrogen was injected into the reactor to form a pressurized state in which a pressure of the reactor was higher than normal pressure by 1.5·10⁵ Pa (0.5 kgf/cm²; absolute pressure: 1127.8 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 1.33·10⁴ Pa (100 Torr; absolute pressure: 100 mmHg) over 10 minutes. The pressure was maintained for 1 hour and then lowered to 7·10² Pa (5 Torr; absolute pressure: 5 mmHg) over 30 minutes. At the same time, the temperature of the reactor was raised up to 280°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.60 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, and a residue derived from isosorbide was 25 mol% with respect to a residue derived from a total diol.

### Comparative Example 2: Preparation of Polyester Copolymer

Terephthalic acid (3275.3 g), ethylene glycol (1217.2 g), and cyclohexane-1,4-diyldimethanol (582.5 g) were put into a 10 L volumetric reactor to which a column, and a condenser capable of being cooled by water were connected. GeO₂ (1.0 g) as a catalyst, phosphoric acid (1.46 g) as a stabilizer, and cobalt acetate (0.7 g) as a coloring agent were used.

Then, nitrogen was injected into the reactor to form a pressurized state in which a pressure of the reactor was higher than normal pressure by 2·10⁵ Pa (1 kgf/cm²; absolute pressure: 1495.6 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 280°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.60 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, and a residue derived from cyclohexanedimethanol was 20.5 mol% with respect to a residue derived from a total diol.

### Comparative Example 3: Preparation of Polyester Copolymer

Terephthalic acid (2953.7 g), ethylene glycol (717.1 g), and cyclohexane-1,4-diyldimethanol (1024.9 g) were put into a 10 L volumetric reactor to which a column, and a condenser capable of being cooled by water were connected. GeO₂ (1.0 g) as a catalyst, phosphoric acid (1.46 g) as a stabilizer, Polysynthrene Blue RLS (Clarient Corp., 0.012 g) as a blue toner, and Solvaperm Red BB (Clarient Corp., 0.004 g) as a red toner were used.

Then, nitrogen was injected into the reactor to form a pressurized state in which a pressure of the reactor was higher than normal pressure by 1.5·10⁵ Pa (0.5 kgf/cm²; absolute pressure: 1127.8 mmHg). Then, a temperature of the reactor was raised up to 220°C over 90 minutes, maintained at 220°C for 2 hours, and then raised up to 255°C over 2 hours. Next, a temperature of the reactor was maintained at 255°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 280°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.80 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, and a residue derived from cyclohexanedimethanol was 40 mol% with respect to a residue derived from a total diol.

### Comparative Example 4: Preparation of Polyester Copolymer

Terephthalic acid (2518.5 g), ethylene glycol (1044.1 g), cyclohexane-1,4-diyldimethanol (240.3 g) and isosorbide (398.7 g) were put into a 10 L volumetric reactor to which a column, and a condenser capable of being cooled by water were connected. GeO₂ (1.0 g) as a catalyst, phosphoric acid (1.46 g) as a stabilizer, Polysynthrene Blue RLS (Clarient Corp., 0.010 g) as a blue toner, and Solvaperm Red BB (Clarient Corp., 0.003 g) as a red toner were used.

Then, nitrogen was injected into the reactor to form a pressurized state in which a pressure of the reactor was higher than normal pressure by 2.3·10⁵ Pa (1.5 kgf/cm²; absolute pressure: 1715.5 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 270°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.65 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer was 100 mol%, a residue derived from isosorbide was 11 mol% and a residue derived from cyclohexanedimethanol was 11 mol%, with respect to a residue derived from a total diol.

### Comparative Example 5: Preparation of Polyester Copolymer

Terephthalic acid (3631.3 g) and ethylene glycol (1763.1 g) were put into a 10 L volumetric reactor to which a column, and a condenser capable of being cooled by water were connected. GeO₂ (1.0 g) as a catalyst, phosphoric acid (1.50 g) as a stabilizer, cobalt acetate (0.7 g) as a coloring agent and Irganox 1076 (17.5 g) as an oxidation stabilizer were used.

Then, nitrogen was injected into the reactor to form a pressurized state in which a pressure of the reactor was higher than normal pressure by 3·10⁵ Pa (2 kgf/cm²; absolute pressure: 2231.1 mmHg). Then, a temperature of the reactor was raised up to 220°C over 90 minutes, maintained at 220°C for 2 hours, and then raised up to 265°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 270°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.60 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.75 dl/g.

A residue derived from terephthalic acid was 100 mol% with respect to a residue derived from a total acid included in the thus-prepared polyester copolymer, and a residue derived from ethylene glycol and diethylene glycol was 100 mol% with respect to a residue derived from a total diol.

### Comparative Example 6: Preparation of Polyester Copolymer

Terephthalic acid (3329.2 g), ethylene glycol (1517.0 g), and cyclohexane-1,4-diyldimethanol (86.6 g) were put into a 10 L volumetric reactor to which a column, and a condenser capable of being cooled by water were connected. GeO₂ (1.0 g) as a catalyst, phosphoric acid (1.46 g) as a stabilizer, cobalt acetate (0.8 g) as a coloring agent and Polyethylene (LUTENE-H ME1000, available from LG Chem Ltd., 0.016 g) as the crystallizing agent were used.

Then, nitrogen was injected into the reactor to form a pressurized state in which a pressure of the reactor was higher than normal pressure by 2.3·10⁵ Pa (1.5 kgf/cm²; absolute pressure: 1715.5 mmHg). Then, a temperature of the reactor was raised up to 220°C over 90 minutes, maintained at 220°C for 2 hours, and then raised up to 270°C over 2 hours. Next, a temperature of the reactor was maintained at 270°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 275°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.65 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, and a residue derived from cyclohexanedimethanol was 3 mol% with respect to a residue derived from a total diol.

### Comparative Example 7: Preparation of Polyester Copolymer

Terephthalic acid (2332.5 g), and cyclohexane-1,4-diyldimethanol (2529.2 g) were put into a 10 L volumetric reactor to which a column, and a condenser capable of being cooled by water were connected. GeO₂ (1.0 g) as a catalyst, phosphoric acid (1.46 g) as a stabilizer, and cobalt acetate (0.7 g) as a coloring agent were used.

Then, nitrogen was injected into the reactor to form a pressurized state in which a pressure of the reactor was higher than normal pressure by 2.0·10⁵ Pa (1.0 kgf/cm²; absolute pressure: 1495.6 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 7·10² Pa (5 Torr; absolute pressure: 5 mmHg) over 30 minutes, and at the same time, the temperature of the reactor was raised up to 280°C over 1 hour, and the polycondensation reaction was carried out while maintaining the pressure of the reactor at 1·10² Pa (1 Torr; absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.55 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.70 dl/g.

A residue derived from terephthalic acid was 100 mol% with respect to a residue derived from a total acid included in the thus-prepared polyester copolymer, and a residue of cyclohexane-1,4-diyldimethanol was 100 mol% with respect to a residue derived from a total diol.

### Experimental Example

The number average molecular weights of the polyester copolymers prepared in Examples and Comparative Examples above were measured using GPC (Gel Permeation Chromatography). Specifically, 0.03 g of a polyester copolymer to be tested for molecular weight was added to 3 mL of o-chlorophenol and dissolved at 150°C for 15 minutes. Then, 9 mL of chloroform was added thereto while cooling to room temperature to prepare a sample. Then, gel permeation chromatography of the sample was performed using two columns (Shodex LF 804) at a temperature of 40°C and a flow rate of 0.7 mL/min. By using polystyrene standards, the number average molecular weight (Mn) was calculated.

In addition, the polyester copolymers prepared in Examples and Comparative Examples above were drawn at the draw ratios shown in Table 1 below to produce films having a thickness of 200 um.

The prepared film was cut into a size of 10 cm x 10 cm (longitudinal length x transverse length) to prepare a sample. The parallel transmittance and the diffuse transmittance of the sample were measured at a wavelength of 400 to 700 nm using a Minolta CM-3600A Meter according to Test Method ASTM D1003-97. The transmittance was defined as a value obtained by combining the parallel transmittance and the diffuse transmittance.

Further, the uniaxially drawn (longitudinal, transverse directions) and biaxially drawn film samples were fixed on 1.0% Zig to which ethanol was applied and changes after 1 hour were observed. When there was no change, it was evaluated as "O", and when there was a change such as breakage, haze, or film fracture, it was evaluated as "X", thereby evaluating chemical resistance.

The results are shown in Table 1 below.

**[Table 1]**

| | Number average molecular weight | Draw ratio(longitu dinal) | Draw ratio(transve rse) | (longitudinal x transverse) | **Transmittan** ce (%) | Chemical resistance |
|---|---|---|---|---|---|---|
| Example 1 | 24,000 | 3.4 | 4 | 13.6 | 88 | ○ |
| Example 2 | 38,000 | 3 | 5 | 15 | 90 | ○ |
| Example 3 | 16,000 | 3.2 | 4.5 | 14.4 | 91 | ○ |
| Example 4 | 20,000 | 3.5 | 4.5 | 15.75 | 89 | ○ |
| Example 5 | 18,000 | 3.5 | 5 | 17.5 | 90 | ○ |
| Example 6 | 32,000 | 3 | 4.5 | 13.5 | 91 | ○ |
| Example 7 | 21,000 | 3 | 4 | 12 | 92 | ○ |
| Example 8 | 27,000 | 3 | 4 | 12 | 92 | ○ |
| Example 9 | 39,500 | 3 | 4 | 12 | 89 | ○ |
| Example 10 | 38,500 | 3 | 4 | 12 | 89 | ○ |
| Comparative Example 1 | 17,000 | 2 | 3 | 6 | 89 | X |
| Comparative Example 2 | 20,000 | 3 | 3 | 9 | 90 | X |
| Comparative Example 3 | 21,000 | 2.5 | 3.5 | 8.75 | 90 | X |
| Comparative Example 4 | 23,000 | 3 | 4 | 12 | 88 | X |
| Comparative Example 5 | 28,000 | 3 | 3.5 | 10.5 | 85 | ○ |
| Comparative Example 6 | 26,000 | 3 | 3 | 9 | 85 | ○ |
| Comparative Example 7 | 27,400 | 2.5 | 3 | 7.5 | 87 | ○ |

## Claims

1. A drawn polyester film comprising: a polyester copolymer containing a first repeating unit represented by the following Chemical Formula 1; a second repeating unit represented by the following Chemical Formula 2 and a third repeating unit represented by the following Chemical Formula 3,
wherein the drawn polyester film has a transmittance of 88% or more at a thickness of 200 um and a wavelength of 400 to 700 nm, measured and determined as indicated in the description: 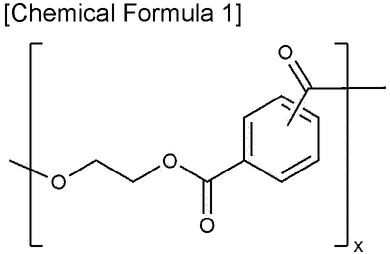 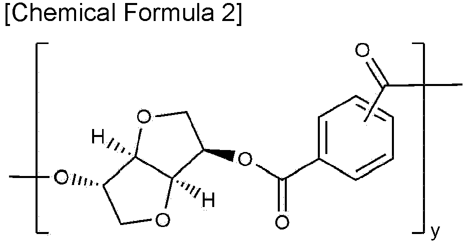 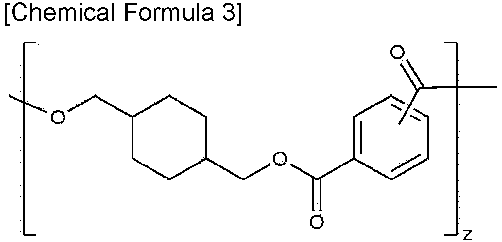
in Chemical Formulas 1 to 3,
x, y, and z are mole fractions in the copolymer, respectively, and the sum of y and z is 5 mol% or more and less than 20 mol%,
y is 1 mol% or more and 5 mol% or less, and
z is 5 mol% or more and 15 mol% or less.

2. The drawn polyester film according to claim 1, wherein
the drawn polyester film is a uniaxially drawn or biaxially drawn polyester film.

3. The drawn polyester film according to claim 1, wherein
the thickness of the drawn polyester film is 5 um to 500 um.

4. The drawn polyester film according to claim 1, wherein
the polyester copolymer has a number average molecular weight of 10,000 to 40,000, measured using Gel Permeation Chromatography with polystyrene standards.

5. An article comprising the drawn polyester film according to any one of claims 1 to 4.

6. The article according to claim 5, wherein
the article is an industrial film, a film for food container, a packaging film, an optical film, an insulation film, or a printing film.

## Patentansprüche

1. Gestreckte Polyesterfolie, umfassend: ein Polyestercopolymer, das eine erste Wiederholungseinheit, dargestellt durch die folgende chemische Formel 1, eine zweite Wiederholungseinheit, dargestellt durch die folgende chemische Formel 2, und eine dritte Wiederholungseinheit, dargestellt durch die folgende chemische Formel 3, enthält,
wobei die gestreckte Polyesterfolie eine Durchlässigkeit von 88 % oder mehr bei einer Dicke von 200 um und einer Wellenlänge von 400 bis 700 nm, gemessen und bestimmt, wie in der Beschreibung angegeben, aufweist: 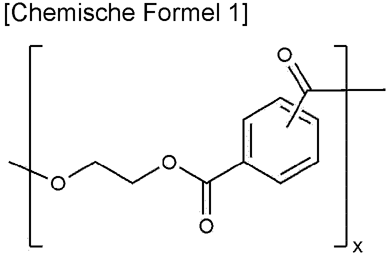 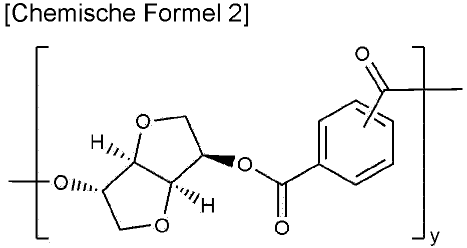 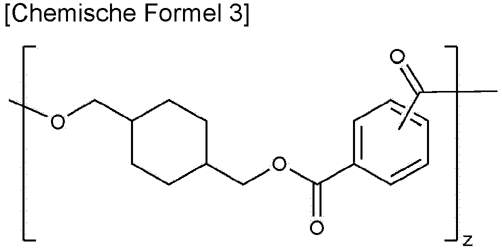
in den chemischen Formeln 1 bis 3
sind x, y und z jeweils Molanteile im Copolymer, und die Summe von y und z beträgt 5 Mol-% oder mehr und weniger als 20 Mol-%,
beträgt y 1 Mol-% oder mehr und 5 Mol-% oder weniger, und
beträgt z 5 Mol-% oder mehr und 15 Mol-% oder weniger.

2. Gestreckte Polyesterfolie nach Anspruch 1, wobei
die gestreckte Polyesterfolie eine uniaxial gestreckte oder biaxial gestreckte Polyesterfolie ist.

3. Gestreckte Polyesterfolie nach Anspruch 1, wobei
die Dicke der gestreckten Polyesterfolie 5 um bis 500 um beträgt.

4. Gestreckte Polyesterfolie nach Anspruch 1, wobei
das Polyestercopolymer ein zahlenmittleres Molekülgewicht von 10 000 bis 40 000 aufweist, gemessen mittels Gelpermeationschromatographie mit Polystyrolstandards.

5. Gegenstand, umfassend die gestreckte Polyesterfolie nach einem der Ansprüche 1 bis 4.

6. Gegenstand nach Anspruch 5, wobei
der Gegenstand eine Industriefolie, eine Folie für Lebensmittelbehälter, eine Verpackungsfolie, eine optische Folie, eine Isolierfolie oder eine Druckfolie ist.

## Revendications

1. Film de polyester étiré comprenant: un copolymère de polyester contenant une première unité répétitive représentée par la formule chimique 1 suivante ; une deuxième unité répétitive représentée par la formule chimique 2 suivante et une troisième unité répétitive représentée par la formule chimique 3 suivante,
dans lequel le film de polyester étiré présente une transmittance de 88 % ou plus à une épaisseur de 200 µm et une longueur d'onde de 400 à 700 nm, mesurée et déterminée comme indiqué dans la description: 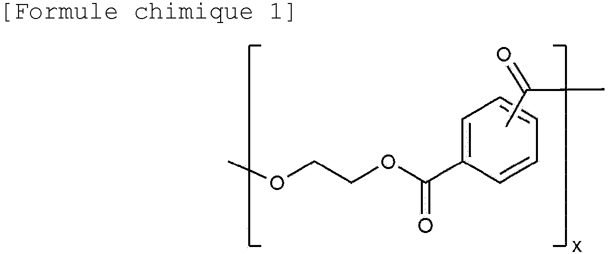 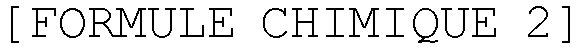 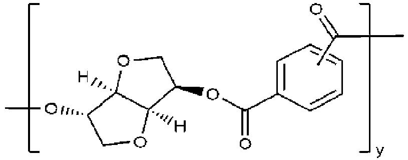 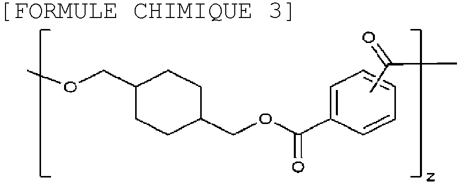 dans la formule chimique 1 à 3
x, y et z sont respectivement des fractions molaires dans le copolymère, et la somme de y et z est de 5 mol % ou plus et inférieure à 20 mol %.
y est égal à 1 mol % ou plus et à 5 mol % ou moins, et
z est de 5 mol % ou plus et de 15 mol % ou moins.

2. Film de polyester étiré selon la revendication 1, dans lequel
le film de polyester étiré est un film de polyester étiré uniaxialement ou biaxialement.

3. Film de polyester étiré selon la revendication 1, dans lequel
l'épaisseur du film de polyester étiré est de 5 µm à 500 µm.

4. Film de polyester étiré selon la revendication 1, dans lequel
le copolymère de polyester présente un poids moléculaire moyen en nombre de 10 000 à 40 000, mesuré à l'aide de la chromatographie par perméation de gel avec des étalons de polystyrène.

5. Article comprenant le film de polyester étiré selon l'une quelconque des revendications 1 à 4.

6. Article selon la revendication 5, dans lequel
l'article est un film industriel, un film pour contenant alimentaire, un film d'emballage, un film optique, un film isolant ou un film pour impression.
